# EUROPÄISCHE PATENTSCHRIFT

(11) **EP 2 729 375 B1**
(45) Veröffentlichungstag und Bekanntmachung des Hinweises auf die Patenterteilung: **30.03.2016**
(21) Anmeldenummer: 12738066.5
(22) Anmeldetag: 06.07.2012
(51) Int. Cl.: B65B 41/12, B65B 47/02, B65B 47/06, B65B 47/10

(54) **VERPACKUNGSMASCHINE MIT EINEM MITTEL ZUR BEFESTIGUNG EINER EINLAGE AN EINEM STRUKTURELEMENT**
PACKAGING MACHINE WITH A MEANS FOR ATTACHING AN INSERT TO A STRUCTURAL ELEMENT
MACHINE D'EMBALLAGE DOTÉE D'UN MOYEN DE FIXATION D'UNE GARNITURE INTÉRIEURE SUR UN ÉLÉMENT STRUCTUREL

(30) Priorität: 06.07.2011 DE 102011107277; 14.12.2011 DE 102011120949
(43) Veröffentlichungstag der Anmeldung: 14.05.2014
(73) Patentinhaber: GEA Food Solutions Germany GmbH, 35216 Biedenkopf-Wallau (DE)
(72) Erfinder: HÜBNER, Gerd, 57234 Wilnsdorf (DE); MEYER, Klaus, 35236 Breidenbach (DE)
(74) Vertreter: Wolff, Felix
(86) Internationale Anmeldenummer: PCT/EP2012/063329
(87) Internationale Veröffentlichungsnummer: WO 2013/004837

(56) Entgegenhaltungen:
- EP-A2- 0 182 139
- WO-A1-86/00275
- WO-A2-94/21519
- DE-A1- 19 725 949
- DE-B- 1 119 100
- FR-A1- 2 651 720
- GB-A- 1 046 671
- US-B1- 6 996 958

## Beschreibung

Die vorliegende Erfindung betrifft eine Verpackungsmaschine, bei der eine Folienbahn entlang einer ersten Transportrichtung intermittierend transportiert wird und dabei Mulden in die Folienbahn eingeformt werden und diese Mulden in einer Verbindungsstation jeweils mit einem Strukturelement verbunden werden, wobei die Strukturelemente und/oder eine Materialbahn, aus der die Strukturelemente gefertigt werden, entlang einer zweiten Transportrichtung transportiert werden.

Derartige Verpackungsmaschinen sind aus dem Stand der Technik, beispielsweise der WO 94 21519, bekannt. Die dort beschriebenen Verpackungsmaschinen haben jedoch den Nachteil, dass sie eine vergleichsweise geringe Taktzahl aufweisen.

Es war deshalb die Aufgabe der vorliegenden Erfindung eine Verpackungsmaschine zur Verfügung zu stellen, mit der höhere Taktzahlen realisiert werden können.

Gelöst wird die Aufgabe mit einer Verpackungsmaschinenach Anspruch 1.

Die vorliegende Erfindung betrifft eine Verpackungsmaschine, bei der eine Folienbahn entlang einer ersten Transportrichtung intermittierend, d.h. taktweise, entlang der Verpackungsmaschine transportiert wird. Während des Stillstands der Folienbahn werden die Mulden in die Folienbahn, insbesondere durch Tiefziehen, eingeformt. Dafür wird die Folienbahn in der Regel aufgewärmt. Vorzugsweise werden bei einem Takt eine Vielzahl von Mulden, ein sogenanntes Format X .Y Mulden in die Folienbahn eingeformt. Danach wird die Folienbahn weitertransportiert. Bevor, während oder nach dem Formen der Mulden, werden diese erfindungsgemäß in einer Verbindungsstation mit einem Strukturelement verbunden. Diese Verbindung ist insbesondere stoffschlüssig und erfolgt vorzugsweise durch Siegeln. Vorzugsweise ist die Verbindung so leicht von dem Strukturelement lösbar, dass diese nach dem Gebrauch der Verpackung einfach und vorzugsweise ohne nennenswerte Beschädigung voneinander getrennt werden können.

Das Strukturelement kann aus einem beliebigen dem Fachmann geläufigen Werkstoff hergestellt sein. Vorzugsweise sind der Werkstoff der Mulde und der Werkstoff des Strukturelementes unterschiedlich. Das Strukturelement kann Papier, Pappe, Karton, Kunststoff, Metall, insbesondere Aluminium, aufweisen oder aus einem Verbund aus zwei oder mehreren dieser Materialien gefertigt sein. Das Strukturelement ist vorzugsweise gefaltet und/oder ist aus mehreren Teilen zusammengesetzt. In einer anderen bevorzugten Ausführungsform ist das Strukturelement durch plastisches Verformen aus einem planen Material hergestellt. In der Regel besteht das Strukturelement aus einem Wandabschnitt und einem Boden. Vorzugsweise ist der Wandabschnitt zumindest teilweise sich zum Boden hin verjüngend vorgesehen. Die Verbindungsstellen zwischen der Mulde und dem Strukturelement erfolgen im Bereich des Wandabschnitts, am Boden und/oder an einem an dem Strukturelement vorgesehenen Rand. Die Verbindung einer Mulde mit einem Strukturelement kann während des Stillstands oder während des Weitertransports der Folienbahn erfolgen. Die Strukturelemente können einzeln oder in einem Verbund aus mehreren Strukturelementen mit den Mulden der Folienbahn verbunden werden, wobei besonders bevorzugt eine Mehrzahl von vereinzelten Verpackungsmulden gleichzeitig jeweils mit einer Mulde verbunden werden. Ein Verbund aus Strukturelementen hat den Vorteil, dass diese einfacher zu handhaben sind, wobei er zu einem späteren Zeitpunkt vereinzelt werden muss.

Das Strukturelement gibt der Verpackungsmulde hauptsächlich die benötigten mechanischen Eigenschaften. Die Einlage sorgt insbesondere für die Konservierung und/oder den Schutz des Lebensmittels und/oder schützt das Strukturelement. Das Strukturelement kann aber auch zur Isolation dienen, insbesondere wenn der Verpackungsinhalt erwärmt worden ist.

Bei der Einlage kann es sich um eine beliebige Kunststofffolie handeln, insbesondere um eine Folie die für die Lebensmittelindustrie geeignet ist. Diese Folie wird erfindungsgemäß mit einem Strukturelement verbunden.

Erfindungsgemäß ist nun vorgesehen, dass die Folienbahn entlang einer ersten Transportrichtung und die vorgefertigten Strukturelemente oder die Materialbahn, in die die Verpackungsmulden eingeformt werden entlang einer zweiten Transportrichtung zu der Verbindungsstation transportiert werden, wobei diese beiden Transportrichtungen zumindest im Bereich der Verbindungsstation zumindest im Wesentlichen parallel zueinander vorgesehen sind. Vorzugsweise werden die Strukturelemente unterhalb der Folienbahn in Richtung der Verbindungsstation gefördert. Vorzugsweise kreuzen sich die Transportrichtungen nicht.

In der Verbindungsstation werden die Mulden und die Strukturelemente miteinander verbunden. In einer bevorzugten Ausführungsform erfolgen das Formen der Mulden und das Verbinden der Mulden mit den Strukturelementen in einer Station, vorzugsweise wird erst die Mulde geformt und diese dann mit dem Strukturelement verbunden. Besonders bevorzugt erfolgt dies mit einem Werkzeug, beispielsweise einem Stempel. In einer alternativen Ausführungsform wird das vorgefertigte Strukturelement mit der Folienbahn, beispielsweise durch Siegeln verbunden und dann die Mulden in die Folienbahn eingeformt.

In der Regel weist diese Verpackungsmaschine noch eine Einlege- und eine Siegelstation auf. Eine Folienbahn, insbesondere eine Kunststofffolienbahn, wird erfindungsgemäß taktweise entlang der Verpackungsmaschine transportiert und dabei wird in einer Tiefziehstation zunächst eine Mulde in die Folienbahn, vorzugsweise durch Tiefziehen, eingeformt. In diese Mulde wird ein Verpackungsgut, vorzugsweise ein Lebensmittel eingefüllt. Diese Mulde wird erfindungsgemäß mit einem Strukturelement verbunden, wobei dieser Verbund vor dem Einlegen des jeweiligen Verpackungsguts in die Einlage oder danach erfolgen kann, wobei das Einlegen des Verpackungsgutes nach der Herstellung des Verbunds bevorzugt ist. Anschließend wird die Einlage in der Siegelstation mit einer Deckelfolie verschlossen und die so hergestellten Verpackungen abschließend vereinzelt.

Erfindungsgemäß weist die Verpackungsmaschine ein Transportmittel auf, das vorgefertigte, vorzugsweise vereinzelte Strukturelemente zu der Verbindungsstation transportiert. Vorzugsweise ist dessen Transportrichtung zumindest abschnittsweise parallel zu der ersten Transportrichtung ausgerichtet. Erfindungsgemäß handelt es sich bei dem Transportmittel um ein Endlosband, das insbesondere unterhalb der Transportebene der Folienbahn angeordnet ist und in einer Ebene parallel zu der Transportrichtrichtung der Folienbahn verläuft. Die Folienbahn und das Transportmittel sind in einem vertikalen Winkel zueinander vorgesehen sind, d.h. das Transportmittel ist nach oben und/oder die Folienbahn ist nach unten geneigt, so dass sie sich aufeinander zu bewegen. Alternativ oder zusätzlich sind die Folienbahn und/oder das Transportmittel zumindest teilweise vertikal verschieblich vorgesehen. Insbesondere zur Vereinigung von Folienbahn und Strukturelement, werden diese kurzeitig relativ zueinander bewegt, insbesondere das Transportmittel zumindest abschnittsweise angehoben. Das Transportmittel kann sich kontinuierlich oder intermittierend bewegen, wobei eine kontinuierliche Bewegung bevorzugt ist. Vorzugsweise ist das Transportmittel mit der Bewegung der Folienbahn synchronisiert. Weiterhin bevorzugt kann die Vereinigung bei stillstehender oder sich bewegender Folienbahn erfolgen. Die Erstreckung des Transportmittel quer zu seiner Transportrichtung entspricht vorzugsweise im Wesentlichen der Breite der Folienbahn.

In einer anderen bevorzugten Ausführungsform umfasst das Transportmittel ein Transferelement, das vereinzelte Strukturelemente aufnimmt und zu der Verpackungsmaschine transportiert. Vorzugsweise bewegt sich das Transferelement entlang einer geschlossenen Bahn. Beispielsweise ist diese Bahn kreis-, ellipsen-, im Wesentlichen rechteckförmig oder im Wesentlichen quadratisch. Die Bahn verläuft vorzugsweise zumindest abschnittweise und/oder zeitweise, zumindest unmittelbar vor und/oder bei der Vereinigung der Strukturelemente und der Folienbahn, vorzugsweise parallel oder senkrecht zu der Transportrichtung der Folienbahn. Das Transferelement kann sich kontinuierlich oder intermittierend bewegen, wobei eine kontinuierliche Bewegung bevorzugt ist. Vorzugsweise ist das Transferelement mit der Bewegung der Folienbahn synchronisiert. Weiterhin bevorzugt kann die Vereinigung bei stillstehender oder sich bewegender Folienbahn erfolgen. Beispielsweise ist das Transferelement ein Transferradsystem oder ein Paternostersystem. Die Erstreckung des Transfermittels quer zu seiner Transportrichtung entspricht vorzugsweise im Wesentlichen der Breite der Folienbahn oder etwa der Länge eines Formats.

Vorzugsweise umfasst das Transportmittel einen Roboter, der beispielsweise ein Transferelement, auf dem vereinzelte Strukturelemente angeordnet sind, aufnimmt und in Richtung der Verpackungsmaschine transportiert.

Vorzugsweise weisen das Transportmittel oder das Transferelement ein Mittel auf, in dem die jeweiligen Strukturelemente vor dem Verbinden mit der Folienbahn gelagert sind. Vorzugsweise sind das Transportmittel und/oder das Transportelement ein Werkzeug, beispielsweise ein Widerlager, beim Verbinden der Verpackungsmulde mit dem Strukturelement.

Vorzugsweise weist die Verpackungsmaschine ein Mittel auf, das jedes Transferelement entlang der Transportrichtung der Verpackungsmulden transportiert, beispielsweise von der Verbindungsstation bis zur Befüll-, in der die Verpackungsmulde befüllt wird oder bis zur Siegelstation, in der die Mulde mit einem Deckel verschlossen wird. Danach entnimmt ein Robot das Transfermittel wieder.

Gemäß einem weiteren oder einem bevorzugten Gegenstand der vorliegenden Erfindung weist die Verpackungsmaschine ein Mittel zur plastischen Verformung der Materialbahn zur Herstellung des Strukturelementes auf. Dieses Mittel formt in eine ebene Materialbahn, aus der das Strukturelement geformt wird, das Strukturelement ein. Das Strukturelement wird dann vorzugsweise aus der Materialbahn ausgeschnitten. Vorzugsweise werden die Folienbahn und die Materialbahn parallel zueinander und insbesondere taktgleich entlang der Verpackungsmaschine transportiert.

Die zu diesem Gegenstand der vorliegenden Erfindung gemachten Ausführungen gelten für die anderen Gegenstände der vorliegenden Erfindung gleichermaßen und umgekehrt.

Vorzugsweise weist die Verpackungsmaschine ein Mittel zum Befeuchten und/oder Erwärmen der Materialbahn zur Herstellung des Strukturelementes aufweist. Dadurch kann dessen plastische Verformung zumindest vereinfacht und/oder es können Risse in der Materialbahn verhindert werden. Die Befeuchtung kann beispielsweise durch Besprühen und/oder durch Dampf erfolgen. Das Befeuchtungsmittel ist vorzugsweise Wasser. Gegebenenfalls wird die Materialbahn nach dem Formen getrocknet.

Ein weiter Gegenstand der vorliegenden Erfindung ist ein Verfahren zum Herstellen einer Verpackung mit einer Mulde, die aus einer Folienbahn tiefgezogen und mit einem Strukturelement verbunden wird, bei dem das Strukturelement mit der Folienbahn verbunden wird, bevor die Verpackungsmulde tiefgezogen wird.

Die zu diesem Gegenstand der vorliegenden Erfindung gemachten Ausführungen gelten für die anderen Gegenstände der vorliegenden Erfindung gleichermaßen und umgekehrt.

Erfindungsgemäß wird die Mulde erst in die Folienbahn geformt, nachdem das Strukturelement mit der Folienbahn verbunden worden ist. Das Verbinden erfolgt vorzugsweise durch einen Stoffschluss, beispielsweise durch Siegeln oder Heften. Dafür weist die Folienbahn vorzugsweise auf ihrer dem Strukturelement zugewandten Seite eine Siegelschicht auf. Vorzugsweise weist die Verpackung einen Rand auf, der mit der Folienbahn verbunden wird.

Vorzugsweise wird die Folienbahn gleichzeitig oder anschließend erwärmt und dann die Folienbahn zur Erzeugung der Mulden tiefgezogen. Dafür wird vorzugsweise Vakuum zwischen dem Strukturelement und der Folienbahn angelegt und/oder die Folienbahn mit einem Stempel in das Strukturelement hineingedrückt. Die Folienbahn kann dabei zur vollständigen Anlage an die Innenseite des Strukturelementes gebracht werden. Die Folienbahn kann aber auch so verformt werden, dass sie nur teilweise an dem Strukturelement anliegt.

Um zu vermeiden, dass sich ein Luftpolster zwischen der Folienbahn und dem Strukturelement bildet, wird entweder dort ein Vakuum gezogen und/oder das Strukturelement wird so gestaltet, dass es für Gas permeabel ist. Dafür kann das Strukturelement aus einem permeablen Material gefertigt sein und/oder Öffnungen aufweisen, durch die Luft beim Tiefziehen der Folienbahn entweichen kann. Die Öffnungen können beispielsweise Perforierungen, beispielsweise eine Mikro- oder Makroperforierung, sein, die das Material per se aufweist oder die nachträglich eingearbeitet werden.

Um ein Luftpolster zwischen der Folienbahn und dem Strukturelement zu bilden, beispielsweise zur Erzeugung und/oder Verstärkung einer wärmeisolierenden Wirkung, wird entweder dort ein beispielsweise zeit- und/oder volumenbegrenztes Vakuum gezogen und/oder das Strukturelement wird so gestaltet, dass es für Gas permeabel ist. Dafür kann das Strukturelement aus einem permeablen Material gefertigt sein und/oder Öffnungen aufweisen, durch die Luft beim Tiefziehen der Folienbahn entweichen kann. Die Öffnungen können beispielsweise Perforierungen, beispielsweise eine Mikro- oder Makroperforierung, sein, die das Material per se aufweist oder die nachträglich eingearbeitet werden.

Ein weiterer Gegenstand der vorliegenden Erfindung ist ein Verfahren zum Herstellen einer Verpackung mit einer Mulde, die aus einer Folienbahn tiefgezogen und mit einem Strukturelement verbunden wird, bei dem die Folienbahn und eine Materialbahn aus der das Strukturelement gefertigt wird, im wesentlichen gleichzeitig und/oder in demselben Werkzeug tiefgezogen werden.

Die zu diesem Gegenstand der vorliegenden Erfindung gemachten Ausführungen gelten für die anderen Gegenstände der vorliegenden Erfindung gleichermaßen und umgekehrt.

Gemäß dieses Gegenstandes der vorliegenden Erfindung werden die Folienbahn und die Materialbahn im Wesentlichen gleichzeitig und/oder in demselben Werkzeug tiefgezogen. Vorzugsweise erfolgt dabei auch die stoffschlüssige Verbindung zwischen der Folienbahn und dem Strukturelement.

Noch ein weiterer Gegenstand der vorliegenden Erfindung ist ein Verfahren zum Herstellen einer Verpackung mit einer Verpackungsmulde, die aus einer Folienbahn tiefgezogen und mit einem Strukturelement verbunden wird, bei dem zum Tiefziehen der Folienbahn zwischen der Folienbahn und dem Strukturelement Vakuum vorgesehen wird.

Die zu diesem Gegenstand der vorliegenden Erfindung gemachten Ausführungen gelten für die anderen Gegenstände der vorliegenden Erfindung gleichermaßen und umgekehrt.

Durch das Vakuum, den Unterdruck zwischen der Folienbahn und dem Strukturelement ist es möglich, dass sich die Folienbahn so verformt, dass sie sich zumindest teilweise innig an die Innenseite des Strukturelementes anschmiegt. Außerdem kann ein Luftpolster zwischen der Folienbahn und dem Strukturelement durch das Vakuum vermieden werden.

Ein weiterer Gegenstand der vorliegenden Erfindung ist eine Verpackung mit einer Mulde aus einem Folienmaterial, die mit einem Strukturelement verbunden ist, wobei das Strukturelement eine Perforierung aufweist und/oder zumindest teilweise aus einem gaspermeablen Material gefertigt ist.

Die zu diesem Gegenstand der vorliegenden Erfindung gemachten Ausführungen gelten für die anderen Gegenstände der vorliegenden Erfindung gleichermaßen und umgekehrt.

Im Folgenden wird die Erfindung anhand der Figuren 1 - 8 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
Figur 1 zeigt eine erste Ausführungsform der herzustellenden Verpackungsmulde.
Figur 2 zeigt eine zweite Ausführungsform der herzustellenden Verpackungsmulde
Figuren 3 - 9 zeigen jeweils eine Ausführungsform der erfindungsgemäßen Verpackungsmaschine.

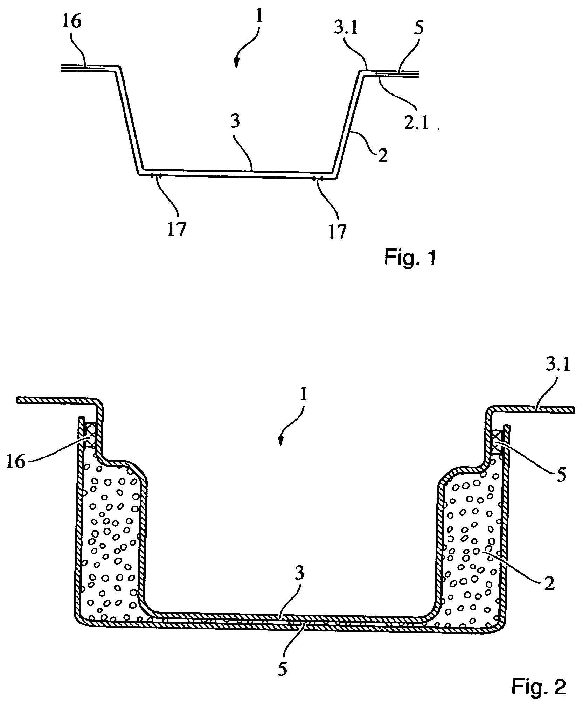

Figur 1 zeigt ein Beispiel einer Verpackungsmulde 1, die mit der erfindungsgemäßen Verpackungsmaschine hergestellt werden kann. Diese Verpackungsmulde 1 weist ein Strukturelement 2 auf, das sich, zumindest im Wesentlichen, um den gesamten Umfang einer tiefgezogenen Mulde 3, die aus deiner Kunststofffolienbahn geformt worden ist, erstreckt. Dieses Strukturelement weist einen Wandabschnitt auf, der sich zum Boden des Strukturelements hin verjüngt. Diese Mulde und das Strukturelement, bei dem es sich vorzugweise um ein Element handelt, dass Papier, Pappe und/oder Karton aufweist, sind an einer oder mehreren Verbindungsstellen 5 insbesondere stoffschlüssig miteinander verbunden. Diese Verbindungsstellen befinden sich hier zwischen einem Rand 2.1 des Strukturelementes 2 und einem Rand 3.1 der Mulde. Durch den Rand 2.1 an dem Strukturelement 2 kann das Strukturelement 2 mit der Folienbahn verbunden werden, bevor die Mulde 2 in die Folienbahn geformt ist. Das Strukturelement 2 kann beispielsweise gefaltet oder tiefgezogen sein. Des Weiteren weist das Strukturelement 2 eine Perforierung 17 auf, um ein Vakuum zwischen der Folienbahn und dem Strukturelement aufbauen zu können und/oder um die Bildung eines Gaspolsters beim Verformen mit einem Stempel zu vermeiden. Die Perforierung 17 kann eine Mikro- und/oder eine Makroperforierung sein. Diese Perforierung kann bereits in dem Material, aus dem das Strukturelement gefertigt wird, vorhanden sein und/oder nachträglich (vor dem Tiefziehen) in dieses eingebracht werden.

Figur 2 zeigt eine weitere Ausführungsform einer Verpackung. In diesem Fall erfolgt die Verbindung 5 zwischen der Mulde 3 und dem Strukturelement 2 an der Seitenwand und dem Boden. Außerdem ist zwischen der Mulde 3 und dem Strukturelement 2 teilweise ein Gaspolster vorgesehen, das als Wärmeisolierung wirkt.

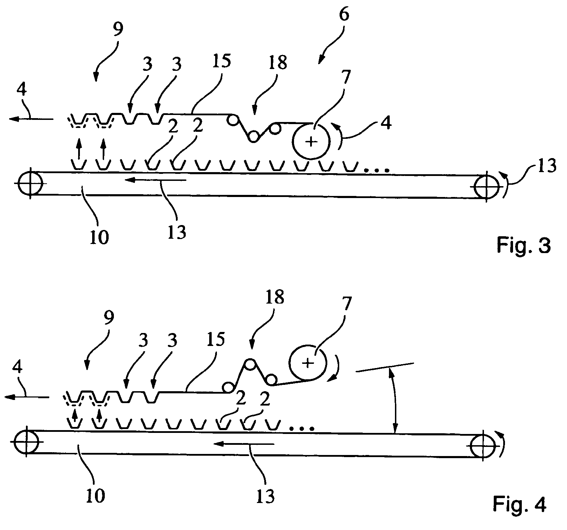

Figur 3 zeigt eine erste Ausführungsform der erfindungsgemäßen Verpackungsmaschine 6. Bei dieser Verpackungsmachine handelt es sich um eine sogenannte Form-Fill-Seal-Maschine, bei der eine Folienbahn 15 von einer Folienrolle 7 abgerollt und entlang der Verpackungsmaschine wie durch den Pfeil 4 symbolisiert, taktweise transportiert wird. Bei jedem Takt wird ein Format bestehend X.Y Einheiten gleichzeitig transportiert und gleichzeitig bearbeitet. In einem ersten Schritt werden bei jedem Takt jeweils X.Y Mulden 3 in die Folienbahn, insbesondere durch Tiefziehen, eingeformt. Sodann wird dieses Format bestehend aus X.Y Mulden taktweise weitertransportiert, bis es die Verbindungsstation 9 erreicht. Hier werden die Mulden 3 jeweils mit einem Strukturelement 2, hier einer Kartonstruktur, verbunden. Bei diesem Verfahrensschritt stehen die Mulden 3 still oder die Mulden bewegen sich. Zur Verbindung der Mulden 3 mit den Strukturelementen 2, werden diese zunächst von einer von der Verpackungsmaschine entfernten Position mit einem Transportmittel 10, hier einem Endlosband, unter die jeweilige Mulde 3 positioniert und beispielsweise in einer Platte, die hier X.Y Einbuchtungen aufweist, positioniert. Die Strukturelemente 2 weisen dabei schon ihre dreidimensionale Form auf. Sodann werden die Strukturelemente 2 gleichzeitig angehoben und über die Mulden 3 geschoben, bis sie ihre gewünschte Endposition relativ zur Mulde 3 erreicht haben. Anschließend erfolgt die stoffschlüssige Verbindung zwischen jeweils einer Mulde 3 und einer Kartonstruktur 2. Der Fachmann erkennt, dass es auch möglich ist das Transportmittel insgesamt oder abschnittsweise anzuheben. Dies kann beispielsweise dadurch erfolgen, dass Siegelbacken von innen gegen die Einlage 3 gedrückt werden und dadurch die Einlage 3 mit der Strukturelement 2 verbinden. Erfindungsgemäß ist nun vorgesehen, dass die Bewegungsrichtung 4 der Folienbahn 15 und die Transportrichtung 13 des Transportmittels 10 parallel zueinander verlaufen. In dem vorliegenden Fall sind beide Bewegungen 4, 13 parallel zu der Papierebene vorgesehen. Danach werden die jetzt miteinander verbundenen Mulden und die Kartonstrukturen taktweise zu einer Einlegestation (nicht dargestellt) transportiert, in der jede Verpackungsmulde 1 mit einem Verpackungsgut befüllt wird. Anschließend wird die so fertiggestellte Verpackungsmulde mit einem Deckel in der Siegelstation (nicht dargestellt) verschlossen, der vorzugsweise an einen Siegelrand unter Druck- und/oder Temperatureinfluss gesiegelt wird. Vor und/oder beim Verschließen der Verpackungsmulde kann ein Gasaustausch in der Verpackungsmulde erfolgen. Bei der Deckelfolie kann es sich um eine sogenannte Skinfolie handeln. Anschließend werden die so fertiggestellten Verpackungen in einer Vereinzelungsstation (nicht dargestellt) vereinzelt, in dem die Kunststofffolienbahn, aus der die Mulden 3 hergestellt worden sind und die Deckelfolienbahn, rund um die Mulden auseinandergeschnitten werden.

Figur 4 zeigt im Wesentlichen die Ausführungsform der Verpackungsmaschine gemäß Figur 3, wobei in dem vorliegenden Fall die Transportebene der Folienbahn 15 schräg, im Winkel a zu dem Transportmittel verläuft. Dadurch vermindert sich der Abstand zwischen den Mulden 3 und den Strukturelementen 2 und diese können miteinander verbunden werden.

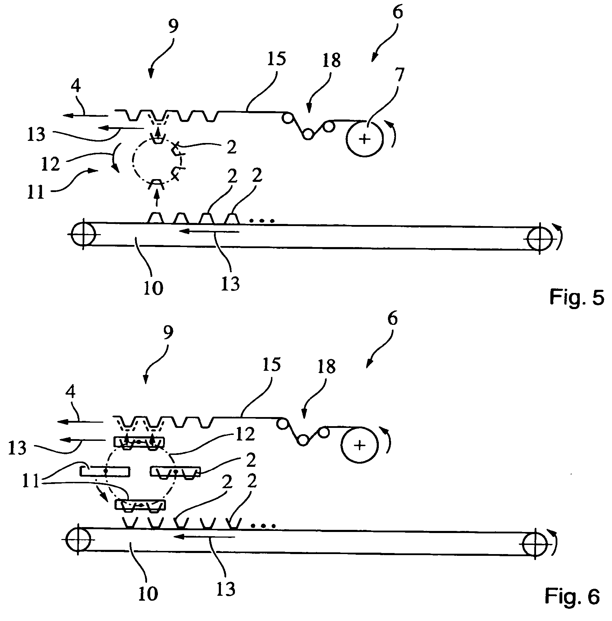

Figur 5 zeigt eine nicht erfindungsgemäße Ausführungsform der Verpackungsmaschine, wobei wiederum auf die Ausführungen gemäß Figur 3 Bezug genommen wird. In dem vorliegenden Fall ist ein Transferelement 11 zwischen dem Transportmittel 10 und der Folienbahn 15 vorgesehen, das die Strukturelemente 2 von dem Transportmittel 10 aufnimmt und unter der Folienbahn platziert. Das Transferelement ist hier eine Transfertrommel, die an ihrer Oberfläche eine Vielzahl von Einbuchtungen aufweist, die ein Strukturelement zumindest teilweise aufnehmen können. Vorzugsweise sind, bezogen auf die Längsachse der Trommel mehrere Einbuchtungen nebeneinander vorgesehen. Vorzugsweise entspricht die Breite der Trommel der jeweiligen Breite der Folie senkrecht zu ihrer Transportrichtung. Die Einbuchtungen der Trommel können abschnittsweise mit einem Unterdruck beaufschlagt werden, um die Strukturelemente an der Trommel zu befestigen, um die Folienbahn tiefzuziehen und/oder um einen Stoffschluss zwischen Folienbahn und Strukturelement zu realisieren. Wie durch den Pfeil 13 dargestellt, ist die Bewegung des Transferelementes 11 zumindest im Bereich der 12-Uhr.Stellung parallel zu der Transportrichtung 4 der Folienbahn. Die Trommel kann sich kontinuierlich oder intermittierend drehen. Die Verbindung der Strukturelemente 2 mit der Folienbahn 15 erfolgt vorzugsweise während deren Vorschub. Die Bewegung der Folienbahn und der Trommel 11 sind vorzugsweise synchronisiert. Die Trommel 11 kann als Werkzeug, beispielsweise als Widerlager für die Verbindung zwischen Folienbahn 15 und Strukturelement 2 dienen.

Figur 6 zeigt im Wesentlichen die nicht erfindungsgemäße Ausführungsform der Verpackungsmaschine gemäß Figur 5, wobei in dem vorliegenden Fall das Transportmittel ein Paternostersystem ist, das Transferelemente 11 aufweist, die sich, vorzugsweise kontinuierlich, entlang einer geschlossenen Bahn 12 bewegen und dabei die Strukturelemente 2 von einem Transportband zu der Folienbahn 15 hin transportieren. In dem vorliegenden Fall erfolgt die Verbindung zwischen den Strukturelementen 2 und der Folienbahn 15 während diese stillsteht. Ansonsten kann auf die Ausführungen zu Figur 5 Bezug genommen werden. Der Fachmann versteht, dass die Transportrichtung des Paternostersystems auch quer zur Transportrichtung 4 der Folienbahn, also um 90 Grad gedreht zur dargestellten Richtung verlaufen kann. Die Breite des Paternostersystems quer zu seiner Transportrichtung entspricht dann vorzugsweise im Wesentlichen der Länge eines Formats.

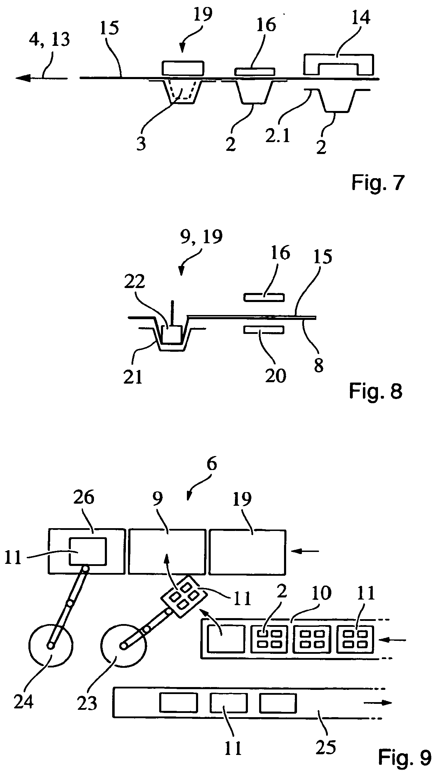

Figur 7 zeigt eine weitere nicht erfindungsgemäße Ausführungsform der Verpackungsmaschine, bei der ein Strukturelement 2 mit einem Rand 2.1 mit einem Werkzeug 14 an einer ebenen Folienbahn 15 beispielweise durch Siegeln oder Heften fixiert wird. Sodann oder gleichzeitig erwärmt ein Heizmittel 16 die Folienbahn und in einem nächsten Schritt wird in einer Form-Nerbindungsstation 19 die Mulde 3, hier durch Tiefziehen mittels Vakuum, in das Strukturelement 2 geformt und mit diesem verbunden. Ansonsten wird auf die Ausführungen zu den anderen Figuren verwiesen.

Figur 8 zeigt eine Ausführungsform, bei der eine Folienbahn 15 und eine Materialbahn 8, gleichzeitig und/oder in einem Werkzeug 21, 22 tiefgezogen werden. Aus der Folienbahn 15 wird die Mulde 3 und mit der Materialbahn 8 das Strukturelement 2 geformt. Zum plastischen Verformen der Folienbahn wird diese mit einer Heizung 16 vorzugsweise erwärmt. Bedarfsweise wird die Materialbahn 8 ebenfalls erwärmt und/oder befeuchtet, um deren Verformungseigenschaften zu verbessern. Danach erfolgt das Tiefziehen vorzugsweise mit einem Stempel 22 und/oder einer Matrize 21 und gegebenenfalls unter der Einwirkung von Vakuum. Ansonsten wird auf die Ausführungen zu den anderen Figuren verwiesen.

Figur 9 zeigt eine weitere nicht erfindungsgemäße Ausführungsform der vorliegenden Erfindung. Das Transferelemente 11 ist in dem vorliegenden Fall ein loses Element, d.h. nicht fest mit einer bestimmten Vorrichtung verbunden, sondern kann von einer Vorrichtung an die andere übergeben werden. Jedes Transferelement 11 ist beispielsweise als Rahmen ausgebildet, der mindestens eine Aussparung aufweist, in die ein oder mehrere Strukturelement(e) 2, beispielsweise Papp-Trays, eingesetzt werden. Die Strukturelemente 2 sind vorzugsweise vereinzelt in dem Rahmen vorgesehen. Die mit Strukturelementen gefüllten Transferelemente werden beispielsweise mi einem Transportband 10, in Richtung der Verbindungsstation 9 der Verpackungsmaschine 6 transportiert. Dort werden die Transferelemente jeweils von einem Roboter 23 übernommen, der sie in die Verbindungsstation einlegt. Dabei werden die Transferelemente vorzugsweise unterhalb einer Folientransportebene platziert. In die Folie sind zu diesem Zeitpunkt eine Vielzahl von Mulden eingeformt, die jeweils mit einem Strukturelement 2 verbunden werden. Vorzugsweise weist die Verpackungsmaschine einen Transportmechanismus auf, mit dem das von dem Roboter übergegebene Transferelement, entlang der Verpackungsmaschine zumindest bis zu der nächsten Station, beispielsweise bis zu der Befüll- oder der Siegelstation transportiert werden kann. Dadurch kann das Transferelement mit den Mulden/Strukturelementen mittransportiert und in der Befüll- oder Siegelstation als Unterstützungswerkzeug und/oder als Gegenlager für ein Siegelwerkzeug dienen. In dem vorliegenden Fall wird das Transferelement 11 von einem zweiten Roboter 24 in einer stromabwärts von der Verbindungsstation vorgesehenen Station 26 der Verpackungsmaschine wieder aufgenommen, aus dieser entfernt und an ein weiteres Transportband 25 übergeben, das die Transferelemente für eine erneute Befüllung abtransportiert. Die Transportmittel 10, 25 sind vorzugsweise übereinander angeordnet. Der Fachmann erkennt, dass auch ein Roboter ausreichend sein kann, um die Übergabe bzw. Entnahme der Transferelemente 11 zu verrichten. Es ist auch möglich die Transferelemente direkt wieder aus Verbindungsstation zu entfernen. In diesem Fall ist es vorteilhaft, wenn der zweite Roboter auf der gegenüberliegenden Seite der Verpackungsmaschine 6 steht. Der Fachmann erkennt, dass die Transferelemente bzw. die Strukturelement auch an die Formstation übergeben werden können. In diesem Fall wird die Mulde in das Verstärkungselement reingeformt und mit diesem verbunden.

### Bezugszeichenliste:

- 1: Verpackungsmulde
- 2: Strukturelement, äußere Kartonstruktur
- 2.1: Rand des Strukturelementes 2
- 3: Mulde aus Folie, insbesondere Kunststofffolie
- 3.1: Rand der Mulde 3
- 4: Transportrichtung Folienbahn
- 5: Verbindungsstelle, Schweiß-, Siegelfläche
- 6: Verpackungsmaschine
- 7: Folienrolle
- 8: Materialbahn zur Herstellung des Strukturelementes 2, Kartonmaterialbahn
- 9: Verbindungsstation
- 10: Transportmittel, Transportband, Transfertrommel, Paternoster
- 11: Transferelement
- 12: Bahn
- 13: Transportrichtung, zweite Transportrichtung
- 14: Siegelwerkzeug, oberes Siegelwerkzeug
- 15: Folienbahn
- 16: Heizmittel
- 17: Perforierung, Öffnung
- 18: Tänzer
- 19: Formstation
- 20: Heizmittel und/oder Befeuchtungsmittel
- 21: Formwerkzeug, unteres Formwerkzeug
- 22: Formwerkzeug, oberes Formwerkzeug
- 23: Roboter, Handhabungseinrichtung
- 24: Roboter, Handhabungseinrichtung
- 25: Wegführung von leeren Transferelementen; Transportband
- 26: Station stromabwärts der Verbindungsstation
- α: vertikaler Winkel

## Patentansprüche

1. Verpackungsmaschine, bei der eine Folienbahn (15) entlang einer ersten Transportrichtung (4) intermittierend transportiert wird und dabei Mulden (3) in die Folienbahn eingeformt werden und diese Mulden in einer Verbindungsstation (9) jeweils mit einem Strukturelement (2) verbunden werden, wobei die Strukturelemente (2), entlang einer zweiten Transportrichtung (13) transportiert werden, wobei die erste und zweite Transportrichtung (4, 12, 13) im Bereich der Verbindungsstation (9) im Wesentlichen parallel zueinander vorgesehen sind und ein Transportmittel (10), das die Strukturelemente (2) zu der Verbindungsstation (9) transportiert, vorgesehen ist, **dadurch gekennzeichnet, dass** das Transportmittel (10) ein Endlosband ist und die Folienbahn (15) mit den darin eingeformten Mulden und das Endlosband in einem Winkel (α) zueinander vorgesehen sind und/oder das Endlosband zumindest teilweise vertikal verschieblich vorgesehen ist.

2. Verpackungsmaschine nach Anspruch 1, **dadurch gekennzeichnet, dass** sie ein Mittel zur plastischen Verformung der Materialbahn zur Herstellung des Strukturelementes (2) aufweist.

3. Verpackungsmaschine nach Anspruch. 2, **dadurch gekennzeichnet, dass** sie ein Mittel zum Befeuchten und/oder Erwärmen der Materialbahn zur Herstellung des Strukturelementes (2) aufweist.

## Claims

1. Packaging machine in which a film web (15) is intermittently conveyed along a first conveying direction (4), depressions (3) being formed in the film web, and said depressions each being connected to a structural element (2) in a connecting station (9), wherein the structural elements (2) are conveyed along a second conveying direction (13), wherein the first and second conveying directions (4, 12, 13), in the region of the connecting station (9), are provided substantially parallel to one another, and a conveying means (10), which conveys the structural elements (2) to the connecting station (9), is provided, **characterized in that** the conveying means (10) is a continuous belt and the film web (15) having the depressions formed therein and the continuous belt are provided at an angle (α) to one another and/or the continuous belt is provided so as to be at least partially vertically displaceable.

2. Packaging machine according to Claim 1, **characterized in that** said packaging machine, for producing the structural element (2), has a means for the plastic deformation of the material web.

3. Packaging machine according to Claim 2, **characterized in that** said packaging machine has a means for moistening and/or heating the material web for producing the structural element (2).

## Revendications

1. Machine d'emballage dans laquelle une bande de film (15) est transportée de manière intermittente le long d'une première direction de transport (4) et des creux (3) sont en l'occurrence formés dans la bande de film et ces creux sont connectés dans un poste de connexion (9) à chaque fois à un élément structurel (2), les éléments structurels (2) étant transportés le long d'une deuxième direction de transport (13), la première et la deuxième direction de transport (4, 12, 13) étant prévues essentiellement parallèlement l'une à l'autre dans la région du poste de connexion (9) et un moyen de transport (10) qui transporte les éléments structurels (2) jusqu'au poste de connexion (9) étant prévu, **caractérisée en ce que** le moyen de transport (10) est une bande sans fin et la bande de film (15) avec les creux formés dans celle-ci et la bande sans fin sont prévues de manière à former ensemble un angle (α) et/ou la bande sans fin est prévue de manière déplaçable verticalement au moins en partie.

2. Machine d'emballage selon la revendication 1, **caractérisée en ce qu'**elle présente un moyen pour la déformation plastique de la bande de matériau pour fabriquer l'élément structurel (2).

3. Machine d'emballage selon la revendication 2, **caractérisée en ce qu'**elle présente un moyen pour humidifier et/ou chauffer la bande de matériau pour fabriquer l'élément structurel (2).
